(19) **Europäisches Patentamt**

**European Patent Office**

**Office européen des brevets**

(11) **EP 1 017 997 B1**

(12) **EUROPÄISCHE PATENTSCHRIFT**

(45) Veröffentlichungstag und Bekanntmachung des Hinweises auf die Patenterteilung:
**14.08.2002   Patentblatt 2002/33**

(21) Anmeldenummer: **98954205.5**

(22) Anmeldetag: **18.09.1998**

(51) Int Cl.⁷: $G01N\ 25/60$

(86) Internationale Anmeldenummer:
**PCT/DE98/02791**

(87) Internationale Veröffentlichungsnummer:
**WO 99/15887 (01.04.1999 Gazette 1999/13)**

(54) **VERFAHREN UND VORRICHTUNG ZUR BESTIMMUNG DER ENTHALPIE VON NASSDAMPF**

METHOD AND DEVICE FOR DETERMINING THE ENTHALPY OF WET STEAM

PROCEDE ET DISPOSITIF POUR LA DETERMINATION DE L'ENTHALPIE DE VAPEUR HUMIDE

(84) Benannte Vertragsstaaten:
**AT CH DE ES FR GB IT LI**

(30) Priorität: **24.09.1997   DE 19742138**

(43) Veröffentlichungstag der Anmeldung:
**12.07.2000   Patentblatt 2000/28**

(73) Patentinhaber: **SIEMENS AKTIENGESELLSCHAFT**
**80333 München (DE)**

(72) Erfinder:
- **ENDRIES, Hans-Joachim**
  **D-45359 Essen (DE)**
- **HERBIG, Helmut**
  **D-45470Mülheim an der Ruhr (DE)**
- **KRÄMER, Hans-Bernd**
  **D-91247 Vorra (DE)**

(56) Entgegenhaltungen:
| | |
|---|---|
| **CH-A- 434 798** | **DE-B- 1 046 068** |
| **JP-A- 57 120 839** | **US-A- 4 681 466** |
| **US-A- 4 836 032** | |

**Beschreibung**

Die Erfindung betrifft ein Verfahren und eine Vorrichtung zur Bestimmung der Enthalpie von Naßdampf, insbesondere von Naßdampf am Austritt von Dampfturbinen. Speziell betrifft die Erfindung Dampfkraftprozesse zur Stromerzeugung in Kernkraftwerken, bei denen die Turbinen im Naßdampfgebiet arbeiten.

Bekannt sind Verfahren zur Bestimmung der Enthalpie von Heißdampf, d.h. von überhitztem Dampf, beispielsweise aus der DE-AS 10 46 068. Diese beschreibt ein Verfahren zur Verbesserung der Zwischenüberhitzung und der Speisewasservorwärmung in Dampfkraftanlagen, insbesondere solchen mit Heizbzw. Fabrikationsdampfabgabe, wobei nach der Entspannung in der Hochdruckmaschine der Dampf in zwei Teildampfmengen geteilt wird, von denen nur der eine Teil durch einen Zwischenüberhitzer geleitet wird, und wobei beide Teilmengen getrennt voneinander in einer zweiflutigen Mitteldruckmaschine auf gleichen Austrittsdruck expandieren und danach hinter der Maschine wieder vereinigt werden, wobei sich entsprechend dem Mengenverhältnis und den Temperaturen der Teildampfmengen eine bestimmte Mischungstemperatur einstellt. Dieses Verfahren zur Bestimmung der Enthalpie von Heißdampf am Austritt von Dampfturbinen, bei dem der Druck und die Temperatur des Heißdampfes gemessen und daraus die Enthalpie berechnet wird, ist ungeeignet, die Enthalpie von Naßdampf zu bestimmen, da die Zustandsgrößen Druck und Temperatur im Naßdampfgebiet gekoppelt sind, das heißt, sie sind nicht voneinander unabhängig. Der Zustand eines Punktes im Naßdampfgebiet liegt erst dann vollständig fest, wenn auch das Mengenverhältnis der beiden Phasen, gasförmig und flüssig, bekannt ist. In der Praxis bereitet dies erhebliche Schwierigkeiten, da die flüssigen Bestandteile im allgemeinen nicht gleichmäßig im Naßdampf verteilt sind. Die DE-AS 10 46 068 behandelt mithin ein Verfahren und eine Einrichtung zur Regulierung von Dampfkraftanlagen, wobei der Dampf nach Entspannung in der Hochdruckmaschine insgesamt in zwei Teildampfmengen geteilt wird, die später, hinter der Maschine, wieder vereinigt (gemischt) werden, wobei sich entsprechend dem Mengenverhältnis und den Temperaturen der Teildampfmengen eine bestimmte Mischungstemperatur einstellen läßt.

Verschiedene, aus der Literatur und aus der Anwendung im Kraftwerksbereich bekannte Meßmethoden zur Messung der Dampfnässe, sind in der Richtlinie VDI 2043 "Messung der Dampfnässe", 07/1979, vorgestellt. Die VDI-Richtlinie befaßt sich mit verschiedenen, aus der Literatur und aus der Anwendung im Kraftwerksbereich bekannte Meßmethoden zur Messung der Dampfnässe. Nach Kapitel 3.4. - Überhitzungskalorimeter- wird zur Ermittlung der Dampfnässe vorgeschlagen, eine Naßdampfprobe durch Zufuhr von Energie zu überhitzen. Der Zustand des überhitzten Dampfes wird durch Messung von Druck und Temperatur bestimmt. Ebenfalls gemessen wird der zugeführte Wärmestrom.

Davon ausgehend ist es eine Aufgabe der vorliegenden Erfindung, ein meßtechnisch einfaches Verfahren zur Bestimmung der Enthalpie von Naßdampf anzugeben, insbesondere von Naßdampf am Austritt einer Dampfturbine. Eine weitere Aufgabe ist es, eine Vorrichtung zur Durchführung des Verfahrens anzugeben.

Die Aufgaben werden durch ein Verfahren, ein Meß- und Berechnungsverfahren zur Bestimmung der Enthalpie von Naßdampf, mit den Merkmalen des Anspruches 1 und durch eine Vorrichtung mit den Merkmalen des Anspruches 10 gelöst. Ausgestaltungen und Weiterbildungen sind Gegenstand der jeweils abhängigen Ansprüche.

Bei dem Meß- und Berechnungsverfahren zur Bestimmung der Enthalpie von Naßdampf, insbesondere von Naßdampf am Austritt einer Dampfturbine, wird zur Probenentnahme ein Teilvolumenstrom des Naßdampfes mit einem Referenzgas zu einem Gemisch gemischt, so daß die flüssigen Bestandteile des Teilvolumenstroms vollständig verdampfen, und wobei anhand gemessener physikalischer Größen die Enthalpie des Referenzgases und die Enthalpie des Gemisches bestimmt werden und daraus die Enthalpie des Naßdampfes berechnet wird. Ein Vorteil des Verfahrens ist es, daß dadurch eine Bestimmung des Dampfgehaltes aus Druck und Enthalpie des Naßdampfes möglich wird.

Hierbei wird bevorzugt der Dampfströmung probenartig lediglich ein Teilvolumenstrom Heißdampf als Referenzgas entnommen. Dieser wird als Referenzgas einem Mischraum so zugeführt, daß bei Mischung mit einem weiteren Teilvolumenstrom des Naßdampfes die darin enthaltenen flüssigen Bestandteile vollständig verdampfen. Im Ergebnis sind zwei Größen durch Messungen bekannt, nämlich die Enthalpie eines Referenzgases bzw. gemäß der bevorzugten Weiterbildung der Erfindung des Heißdampfes sowie die Enthalpie eines Referenzgas-Naßdampf-Gemisches, mit denen die gesucht Größe, nämlich die Enthalpie des Naßdampfes berechnet werden kann.

Bei einer Weiterbildung des Verfahrens wird der Teilvolumenstrom des Naßdampfes im wesentlichen adiabatisch mit dem Referenzgas gemischt. Es ist daher nicht erforderlich, eine Enthalphieänderung während des Mischvorganges zu berücksichtigen.

Bei einer bevorzugten Weiterbildung ist das Referenzgas Heißdampf. Der Naßdampf und der Heißdampf bilden eine Mischung aus, deren Zustandspunkt im Heißdampfgebiet liegt. Bekannte Verfahren können im Anschluß zur Bestimmung der Enthalpie dieser Mischung eingesetzt werden. Die im weiteren dargestellten Ausführungsformen verwenden die Begriffe "Gemisch" und "Mischung" entsprechend der Verwendung einer zwei oder mehr Komponenten aufweisenden Strömung im ersten Falle und entsprechend eines Einkomponentenfluides im zweiten Falle. Das Einkomponentenfluid und das Mehrkomponentenfluid können ein- oder zweiphasig sein. Im Sinne der Erfindung sind beide Begriffe als Synonyme zu betrachten.

Bei einer günstigen Ausgestaltung des Verfahrens werden der Druck und/oder die Temperatur und/oder die Menge des Referenzgases abhängig von der relativen Feuchte des Gemisches geregelt. Bei dieser Ausgestaltung können die Eigenschaften des Referenzgases so eingestellt werden, daß die flüssigen Bestandteile des Teils des Naßdampfes zuverlässig vollständig verdampfen, wenn sich die Eigenschaften des Naßdampfes im Laufe der Zeit ändern.

Gemäß der bevorzugten Weiterbildung, bei der Heißdampf als Referenzgas eingesetzt wird, werden der Druck und/oder die Temperatur und/oder die Menge des Heißdampfs in Abhängigkeit des Abstandes des Zustandspunktes der Mischung im Heißdampfgebiet zur Sättigungslinie geregelt.

Erforderlich ist es weiterhin, daß die Enthalpie des Referenzgases und/oder des Gemisches jeweils durch Messung des Druckes und der Temperatur bestimmt werden. Aus diesen Zustandsgrößen und der Menge des Referenzgases bzw. des Gemisches kann die Enthalpie in bekannter Weise unmittelbar berechnet werden.

Insbesondere beim Vorhandensein kontinuierlicher Ströme des Referenzgases und des Naßdampfes ist es vorteilhaft, wenn der Teil des Naßdampfes und das Referenzgas in eine Mischstrecke eingeleitet werden und am Ende der Mischstrecke die Enthalpie des Gemisches bestimmt wird. Über den Weg der Mischstrecke können die flüssigen Bestandteile vollständig verdampfen und können sich ein homogener Druck und eine homogene Temperatur in dem Gemisch einstellen.

Bei einer Weiterbildung des Verfahrens wird die Enthalpie des Naßdampfes kontinuierlich oder quasi-kontinuierlich unter Berücksichtigung der Massenströme des Teils des Naßdampfes und des Referenzgases berechnet. Dies bietet die Möglichkeit, wichtige Größen eines Dampfkraftprozesses laufend zu überwachen und gegebenenfalls den Dampfkraftprozeß neu einzustellen. Bevorzugt wird eine Weiterbildung, bei der die Massenströme des Gemisches und des Referenzgases gemessen werden. Bei stationären Strömungen kann dann der Massenstrom des Teils des Naßdampfes berechnet werden.

Bei noch einer Weiterbildung des erfindungsgemäßen Verfahrens wird aus der Enthalpie des Naßdampfes der Wirkungsgrad einer Dampfturbine bestimmt.

Die erfindungsgemäße Vorrichtung zur Durchführung des Verfahrens weist eine erste Zuführung zum Zuführen des Naßdampfes und eine zweite Zuführung zum Zuführen des Referenzgases auf, die beide in einen Mischraum münden, und weist weiterhin eine Meßeinrichtung zur Bestimmung der Enthalpie des Gemisches im Mischraum auf. Bevorzugt wird eine Weiterbildung, bei der die beiden Zuführungen über eine gemeinsame Düse in den Mischraum münden. Der Naßdampf sowie das Referenzgas, insbesondere Heißdampf, können hierbei probenartig zusammengeführt werden. Weiterhin bevorzugt wird, daß die Düse eine innere Austrittsöffnung aufweist, die von einer äußeren Austrittsöffnung umgeben ist, wobei eine der Zuführungen an der inneren und die andere Zuführung an der äußeren Austrittsöffnung in den Mischraum mündet.

Weitere Ausführungsformen des Verfahrens und der Vorrichtung werden anhand der Zeichnung näher beschrieben. Die Erfindung ist jedoch nicht auf diese Ausführungsformen beschränkt. Die einzelnen Figuren der Zeichnung zeigen:

Fig. 1    ein h-s-Diagramm und

Fig. 2    eine Ausführungsform der erfindungsgemäßen Vorrichtung.

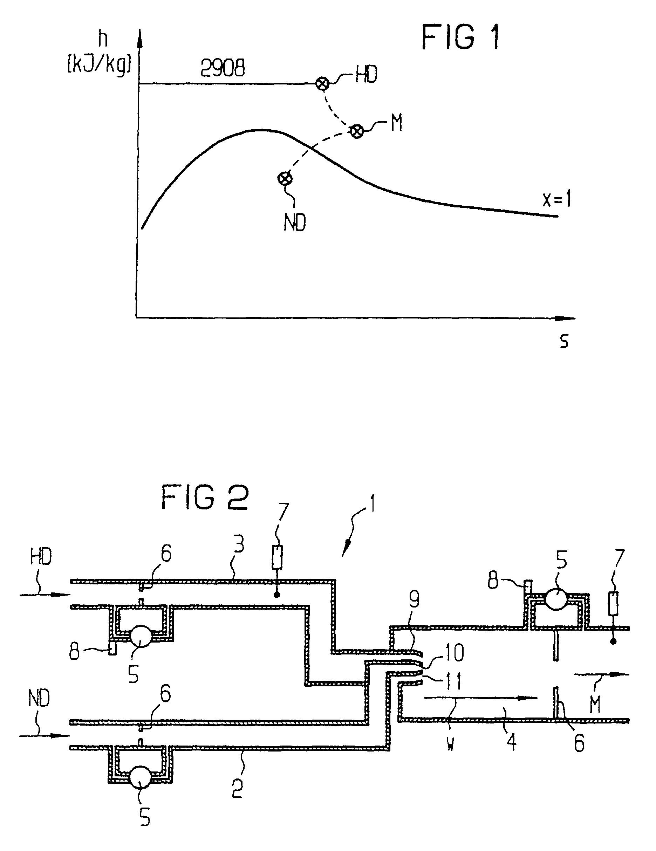

Fig. 1 zeigt ein Diagramm, in dem die spezifische Enthalpie h über der spezifischen Entropie s von Wasserdampf aufgetragen ist. Mit einer durchgezogenen Linie ist die Grenze zwischen dem Heißdampfgebiet (oberhalb der Linie) und dem Naßdampfgebiet eingezeichnet. In dem Diagramm sind Zustände eines Heißdampfes HD, eines Naßdampfes ND und einer resultierenden Mischung M markiert, das durch Mischen des Heißdampfes und eines Teils des Naßdampfes erzeugt wird. Der Prozeß der Vermischung verläuft wie mit den gestrichelten Linien angedeutet. Für den Heißdampf steht eine Quelle zur Verfügung, die die Entnahme von Heißdampf von einem Druck p = 12 bar bei einer Temperatur von q = 240°C mit einem Massenstrom von 2 kg/s erlaubt. Diese Größen werden ungefähr konstant gehalten. Bei einer Variante des Verfahrens wird die Heißdampfquelle variabel, das heißt in Abhängigkeit vom Abstand des Zustandspunktes der Mischung M von der Sättigungslinie eingestellt. Den genannten Größen Druck p = 12 bar und Temperatur q = 240°C entspricht eine spezifische Enthalpie von ungefähr 2908 kJ/kg. Dies ist etwa der Zustand eines zwischenüberhitzten Heißdampfes bei Prozessen mit Sattdampfturbinen.

In Fig. 2 ist eine Vorrichtung 1 zur Durchführung des Verfahrens zur Naßdampfenthalpiebestimmung dargestellt. Durch eine erste Zuleitung 2 wird ein Teil des Naßdampfes ND (eine Naßdampfprobe) und durch eine zweite Zuleitung 3 wird Heißdampf HD (Referenzgasprobe) in einen Mischraum 4 geführt. Es erfolgt somit eine Probenentnahme von Naßdampf aus dem Gesamtnaßdampfstrom einer nicht dargestellte Dampfturbine. Die Zuleitung 2 mündet an der inneren Austrittsöffnung 10 einer Zweistromdüse 9 in den Mischraum 4. Die zweite Zuleitung 3 mündet an einer äußeren Austrittsöffnung 11, die die innere Austrittsöffnung 10 geschlossen umlaufend umgibt. Über die Mischstrecke w hinweg verdampfen die flüssigen Bestandteile des Teils des Naßdampfes ND vollständig und gleichen sich die Zustandsgrößen der beiden durch die beiden Zuleitungen 2, 3 zugeführten Dämpfe ND, HD aneinander an. Am Ende der Mischstrecke w werden der Druck p und die Temperatur q, sowie der Massenstrom m der Mischung gemessen bzw. bestimmt. Dazu befinden sich dort ein Druckdifferenzmesser 5, ein Temperaturfühler 7 und ein Absolutdruckmesser 8. Der Differenzdruckmesser 5 mißt den Druckabfall zwischen zwei Stellen der Strömung, vor und hinter einem Drosselgerät, beispielsweise einer Blende 6. Aus der Druckdifferenz unter Verwendung der Bernoulli-Gleichung wird der Massenstrom mM der Mischung M berechnet. Aus dem Druck und der Temperatur der Mischung M wird in bekannter Weise die spezifische Enthalpie hM berechnet. In analoger Weise werden in der zweiten Zuleitung 3 der Massenstrom mHD und die spezifische Enthalpie hHD des Heißdampfes HD bestimmt. Die Anordnung der Meßgeräte erfolgt zweckmäßig, d.h. nach den vor Ort zur Verfügung stehenden Möglichkeiten. Die Anordnung der Meßgeräte erfolgt besonders bevorzugt unter Berücksichtigung und in Übereinstimmung mit technischen Richtlinien und Normen, wobei für die Genauigkeit des in Fig.2 beschriebenen Verfahrens wesentlich die Einhaltung der Norm DIN EN ISO 5167-1, Durchflußmessung von Fluiden mit Drosselgeräten, November 1995, ist.

Bezüglich der ersten Zuleitung 2 wird der Massenstrom mND des Teils des Naßdampfes ND aus der Differenz mM - mHD bestimmt. Die dargestellten Meßgeräte in der ersten Zuleitung 2 dienen vor allem zur Kontrolle und könnten auch gegebenenfalls entfallen. Als vorteilhaft würde sich die Verwendung eines Massenstrommeßgerätes erweisen, welches in der Lage ist, Naßdampfströme in Leitung kleinen Durchmessers zu messen. Dieses erlaubt, die Genauigkeit des gesamten Verfahrens nochmals zu steigern. Eine nicht gezeigte Auswertevorrichtung erfaßt die Meßwerte, berechnet daraus die genannten Zwischengrößen und berechnet zusätzlich die Zielgröße, die spezifische Enthalpie hND des Naßdampfes ND gemäß der Gleichung

$$h_{ND} = h_M - \frac{m_{HD}}{m_{ND}} \cdot (h_{HD} - h_M).$$

Wesentlich für die zuverlässige Bestimmung der spezifischen Enthalpie hND ist die Ableitung eines Teilstromes des Naßdampfes ND mit für den Gesamtstrom repräsentativen physikalischen Eigenschaften. Dazu werden hier die Verwendung einer Einrichtung zur Homogenisierung der physikalischen Eigenschaften des Stromes und eine Entnahmestelle vorgeschlagen, die unmittelbar hinter der Einrichtung zur Homogenisierung angeordnet ist. Bezüglich der Ausgestaltung der Entnahmestelle wird vollinhaltlich auf die oben schon erwähnte Richtlinie VDI 2043 Bezug genommen und verwiesen.

Die Zuleitungen 2, 3 und der Mischraum 4 sind nach außen gut wärmeisoliert, so daß zumindest in dem Bereich zwischen den Meßgeräten 5, 6, 7, 8 in den Zuleitungen 2, 3 und dem Mischraum 4 höchstens unwesentlich geringer Wärmeübertrag zwischen dem Dampf und der Umgebung stattfindet.

Die Zweistromdüse 9, durch die die Dämpfe ND, HD in den Mischraum 4 eingeleitet werden, bewirkt eine Entspannung, so daß der Druck der Mischung M zumindest kleiner ist als der Druck des Dampfes HD, ND mit dem höheren Druck. Die Zweistromdüse 9 gewährleistet eine gute Vermischung der beiden Dämpfe HD, ND, wodurch die Mischstrecke w kurz gewählt werden kann. Dadurch wird auch gewährleistet, daß der Mischprozeß zumindest annähernd adiabatisch verläuft. Anders als in Fig. 2 aus zeichnungstechnischen Gründen dargestellt befinden sich aus dem gleichen Grund die Meßgeräte 5, 6, 7, 8 in den beiden Zuleitungen 2, 3 unmittelbar vor der Zweistromdüse 9.

Die Erfindung ermöglicht eine Bestimmung der Enthalpie von Naßdampf, insbesondere von Naßdampf am Austritt einer Dampfturbine im Dampfkraftprozeß eines Kernkraftwerkes. Durch Verwendung einer Heißdampfquelle werden die Schwierigkeiten der Bestimmung des Dampfgehaltes vermieden und können bekannte Meßmethoden angewendet werden. Aus diesem Grund ist das erfindungsgemäße Verfahren kostengünstig ausführbar.

**Patentansprüche**

1. Meß- und Berechnungsverfahren zur Bestimmung der Enthalpie (hND) von Naßdampf (ND), insbesondere von Naßdampf (ND) am Austritt einer Dampfturbine, wobei zur Probenentnahme ein Teilvolumenstrom des Naßdampfes (ND) mit einem Referenzgas (HD) zu einem Gemisch (M) gemischt wird, so daß die flüssigen Bestandteile des Teilvolumenstroms vollständig verdampfen, und wobei anhand gemessener physikalischer Größen die Enthalpie (hHD) des Referenzgases (HD) und die Enthalpie (hM) des Gemisches (M) bestimmt werden und daraus die Enthalpie (hND) des Naßdampfes (ND) berechnet wird.

2. Verfahren nach Anspruch 1, wobei der Teilvolumenstrom des Naßdampfes (ND) im wesentlichen adiabatisch mit dem Referenzgas (HD) gemischt wird.

3. Verfahren nach Anspruch 2, wobei als Referenzgas (HD) Heißdampf verwendet wird.

4. Verfahren nach einem der Ansprüche 1 bis 3, wobei der Druck und/oder die Temperatur und/oder die Menge des Referenzgases (HD) abhängig von der relativen Feuchte und/oder der Lage des Zustandspunktes des Gemisches (M) geregelt werden.

**5.** Verfahren nach einem der Ansprüche 1 bis 4, wobei die Enthalpie (hHD, hM) des Referenzgases (HD) und/oder des Gemisches (M) jeweils durch Messung des Druckes und der Temperatur bestimmt werden.

**6.** Verfahren nach einem der Ansprüche 1 bis 5, wobei der Naßdampf (ND) und das Referenzgas (HD) in eine Mischstrecke (w) eingeleitet werden und wobei am Ende der Mischstrecke (w) die Enthalpie (hM) des Gemisches (M) bestimmt wird.

**7.** Verfahren nach einem der Ansprüche 1 bis 6, wobei die Enthalpie (hND) des Naßdampfes (ND) kontinuierlich oder quasi-kontinuierlich unter Berücksichtigung der Massenströme (mND, mHD) des Naßdampfes (ND) und des Referenzgases (HD) berechnet wird.

**8.** Verfahren nach Anspruch 7, wobei die Massenströme (mM, mHD) des Gemisches (M) und des Referenzgases (HD) gemessen werden.

**9.** Verfahren nach einem der Ansprüche 1 bis 8, wobei aus der Enthalpie (hND) des Naßdampfes (ND) der Wirkungsgrad einer Dampfturbine bestimmt wird.

**10.** Vorrichtung (1) zur Durchführung des Verfahrens nach einem der Ansprüche 1 bis 9, mit einer ersten Zuführung (2) zum Zuführen des Naßdampfes (ND) und einer zweiten Zuführung (3) zum Zuführen des Referenzgases (HD), wobei beide Zuführungen in einen Mischraum (4) münden, und mit einer Meßeinrichtung (5, 6, 7, 8) zur Bestimmung der Enthalpie (hM) des Gemisches (M) im Mischraum (4).

**11.** Vorrichtung nach Anspruch 10, wobei die beiden Zuführungen (2, 3) über eine gemeinsame Düse (9) in den Mischraum (4) münden.

**12.** Vorrichtung nach Anspruch 11, wobei die Düse (9) eine innere Austrittsöffnung (10) aufweist, die von einer äußeren Austrittsöffnung (11) umgeben ist, und wobei eine der Zuführungen (2) an der inneren (10) und die andere Zuführung (3) an der äußeren (11) Austrittsöffnung in den Mischraum (4) mündet.

**Claims**

**1.** Measurement and calculation method for determining the enthalpy (nWS) of wet steam (WS), in particular of wet steam (WS) at the outlet of a steam turbine, for sampling purposes a part volume flow of the wet steam (WS) being mixed with a reference gas (HS) to form a mix (M), so that the liquid constituents of the part volume flow evaporate completely, and the enthalpy (hHS) of the reference gas (HS) and the enthalpy (hM) of the mix (M) being determined by means of measured physical variables and the enthalpy (hWS) of the wet steam (WS) being calculated from these enthalpies.

**2.** Method according to Claim 1, the part volume flow of the wet steam (WS) being mixed essentially adiabatically with the reference gas (HS).

**3.** Method according to Claim 2, hot steam being used as the reference gas (HS).

**4.** Method according to one of Claims 1 to 3, the pressure and/or the temperature and/or the quantity of the reference gas (HS) being regulated as a function of the relative humidity and/or of the position of the state point of the mix (M).

**5.** Method according to one of Claims 1 to 4, the enthalpy (hHS, hM) of the reference gas (HS) and/or of the mix (M) being determined in each case by measuring the pressure and the temperature.

**6.** Method according to one of Claims 1 to 5, the wet steam (WS) and the reference gas (HS) being introduced into a mixing stage (w), and the enthalpy (hM) of the mix (M) being determined at the end of the mixing stage (w).

**7.** Method according to one of Claims 1 to 6, the enthalpy (hWS) of the wet steam (WS) being calculated continuously or quasi-continuously, taking into account the mass flows (mWS, mHS) of the wet steam (WS) and of the reference gas (HS).

**8.** Method according to Claim 7, the mass flows (mM, mHS) of the mix (M) and of the reference gas (HS) being measured.

**9.** Method according to one of Claims 1 to 8, the efficiency of a steam turbine being determined from the enthalpy (hWS) of the wet steam (WS).

**10.** Device (1) for carrying out the method according to one of Claims 1 to 9, with a first supply (2) for supplying the wet steam (WS) and a second supply (3) for supplying the reference gas (HS), the two supplies opening into a mixing space (4), and with a measuring means (5, 6, 7, 8) for determining the enthalpy (hM) of the mix (M) in the mixing space (4).

**11.** Device according to Claim 10, the two supplies (2, 3) opening into the mixing space (4) via a common nozzle (9).

**12.** Device according to Claim 11, the nozzle (9) having an inner outlet orifice (10) which is surrounded by an outer outlet orifice (11), and one of the supplies (2) opening into the mixing space (4) at the inner outlet orifice (10) and the other supply (3) at the outer outlet orifice (11).

## Revendications

1. Procédé de mesure et de calcul pour déterminer l'enthalpie (hND) de la vapeur humide (ND), notamment de la vapeur humide (ND) à la sortie d'une turbine à vapeur, dans lequel on mélange, pour le prélèvement d'échantillon, un courant partiel en volume de la vapeur humide (ND) à un gaz de référence (HD) en un mélange (M), de manière à évaporer complètement les constituants liquides du courant partiel en volume et dans lequel on détermine au moyen de grandeurs physiques mesurées l'enthalpie (hHD) du gaz (HD) de référence et l'enthalpie (HM) du mélange (M) et on en calcule l'enthalpie (hND) de la vapeur humide (ND).

2. Procédé suivant la revendication 1, dans lequel on mélange le courant partiel en volume de la vapeur humide (ND) d'une manière sensiblement adiabatique au gaz (HD) de référence.

3. Procédé suivant la revendication 2, dans lequel on utilise comme gaz (HD) de référence de la vapeur chaude.

4. Procédé suivant l'une des revendications 1 à 3, dans lequel on règle la pression et/ou la température et/ou la quantité du gaz (HD) de référence en fonction de l'humidité relative et/ou de la position du point d'état du mélange (M).

5. Procédé suivant l'une des revendications 1 à 4, dans lequel on détermine l'enthalpie (hHD, hM) du gaz (HD) de référence et/ou du mélange (M) respectivement en mesurant la pression et la température.

6. Procédé suivant l'une des revendications 1 à 5, dans lequel on introduit de la vapeur humide (ND) et le gaz (HD) de référence dans une zone (w) de mélange et on détermine à l'extrémité de la zone (w) de mélange l'enthalpie (hM) du mélange (M).

7. Procédé suivant l'une des revendications 1 à 6, dans lequel on calcule l'enthalpie (hND) de la vapeur humide (ND) en continu ou en quasi-continu en tenant compte des courants (mND, mHD) massiques de la vapeur humide (ND) et du gaz (HD) de référence.

8. Procédé suivant la revendication 7, dans lequel on mesure les courants (mM, mHD) massiques du mélange (M) et du gaz (HD) de référence.

9. Procédé suivant l'une des revendications 1 à 8, dans lequel on détermine le rendement d'une turbine à vapeur à partir de l'enthalpie (hND) de la vapeur humide (ND).

10. Dispositif (1) pour la mise en oeuvre du procédé suivant l'une des revendications 1 à 9, comprenant une première entrée (2) pour apporter de la vapeur humide (ND), une deuxième entrée (3) pour apporter du gaz (HD) de référence, les deux entrées débouchant dans une chambre (4) de mélange et comprenant un dispositif (5, 6 ,7 ,8) de mesure pour déterminer l'enthalpie (hM) du mélange (M) dans la chambre (4) de mélange.

11. Dispositif suivant la revendication 10, dans lequel les deux entrées (2, 3) débouchent dans la chambre (4) de mélange par une buse (9) commune.

12. Dispositif suivant la revendication 11, dans lequel la buse (9) comporte un orifice (10) intérieur de sortie qui est entouré d'un orifice (11) extérieur de sortie et l'une des entrées débouche dans la chambre (4) de mélange à l'orifice intérieur (10) de sortie et l'autre entrée (3) à l'orifice extérieur (11) de sortie.

FIG 1

$h$
[kJ/kg]

2908

⊗ HD

⊗ M

⊗

ND

x = 1

s

FIG 2

HD

ND

7

1

6

3

8

5

6

9

8

5

7

10

11

W

4

6

M

2

6

5